# EUROPEAN PATENT APPLICATION

(11) **EP 1 800 912 A1**
(43) Date of publication of application: **27.06.2007**
(21) Application number: 05765429.5
(22) Date of filing: 29.06.2005
(51) Int. Cl.: B60C 23/04

(54) **TIRE INFORMATION TRANSMISSION DEVICE, TIRE INFORMATION ACQUISITION SYSTEM, AND TIRE/WHEEL ASSEMBLY**

(30) Priority: 02.07.2004 JP 2004196223
(71) Applicant: THE YOKOHAMA RUBBER CO., LTD., Tokyo 105-8685 (JP); SONY CORPORATION, Tokyo 141-0001 (JP)
(72) Inventor: EBINUMA, Toshimitsu, C/O The Yokohama Rub. Co. Ltd, Hiratsuka City, Kanagawa 2548601 (JP); KITAMI, Takahide, C/O The Yokohama Rubber Co. LTD., Hiratsuka City, Kanagawa 2548601 (JP); NAKATANI, Kouji, C/O The Yokohama Rubber Co., LTD., Hiratsuka City, Kanagawa 2548601 (JP); NIHEI, Hideki, C/O The Yokohama Rubber Co., LTD., Hiratsuka City, Kanagawa 2548601 (JP); YAMAGUCHI, Norishige, c/o Sony Energy Devices Corp, Koriyama-shi, Fukushu (JP); MORITA, Hiroyuki, c/o Sony Energy Devices Corp., Koriyama-shi, Fukushu (JP)
(74) Representative: Vossius & Partner
(86) International application number: PCT/JP2005/011946
(87) International publication number: WO 2006/003934

(57) **Abstract**

A tire information transmitter is mounted in a tire cavity region surrounded by a tire inner circumference surface and a wheel wall surface and senses atmospheric information in the tire cavity region to wirelessly transmit to outside the tire cavity region. The transmitter has a sensor for sensing atmospheric information in the tire cavity region, a circuit board having a processing circuit for processing a sensed signal from the sensor and having a transmitting circuit for wirelessly transmitting a processed signal and a battery for supplying power for driving the circuits. The battery is made as an encapsulated body of a thin plate shape, having a thin plate surface, by encapsulating battery components with an insulation film, and the encapsulated body has an area ratio of the thin plate surface to a thickness of the thin plate shape of not less than 200 mm, and a mass of not more than 5 g. A tire information acquiring system has the transmitter and a receiver for receiving a signal from the transmitter.

## Description

### TECHNICAL FIELD

The present invention relates to a tire information transmitter that is mounted on a vehicle having a wheel assembly, such as truck, bus, passenger car and motor-bike, and transmits atmospheric information in a tire cavity region, such as tire inflation pressure and tire temperature, and relates to a tire information acquiring system and a tire/wheel assembly that acquire the atmospheric information.

### BACKGROUND ART

For vehicles having a wheel assembly in which a tire is assembled to a wheel, such as truck, bus, passenger car, and motor-bike, it has been proposed to mount a tire monitoring system for constantly monitoring inflation pressure and/or tire temperature in the tire cavity region, so that if the tire inflation pressure or tire temperature exceeds a predetermined range, an alert indicating abnormal situation is issued.

Generally, in a tire monitoring system, a tire information transmitter is provided in a tire cavity region which is surrounded by a tire inner circumference surface and a wheel wall surface to acquire atmospheric information in the region and wirelessly transmit the atmospheric information to outside the tire cavity region. The atmospheric information is received by a receiver provided in the vicinity of a tire house of a vehicle body, and based on the received atmospheric information, the presence of any abnormality is determined, so that the driver is alerted to any abnormal situation.

As an example of the tire monitoring system, a tire air pressure sensing apparatus described in PATENT DOCUMENT 1 is exemplified. In the system, an air pressure/temperature sensing body is provided near a tire valve (valve) in a tire cavity region which is a closed space isolated from outside by being surrounded by a tire inner circumference surface and a wheel surface, to constantly monitor the atmospheric information in the tire cavity region.
In such an air pressure/temperature sensing body, power is required for driving a sensing sensor and other circuits for transmitting the sensed atmospheric information. As the power, a coin shaped batteries or other small batteries may be used.

PATENT DOCUMENT 1: JP 2002-225519 A

### DISCLOSURE OF THE INVENTION

### PROBLEMS TO BE SOLVED BY THE INVENTION

However, the assembly of tire and wheel (tire/wheel assembly) is usually in service for a long period of time, for example, 5 - 10 years without separating the tire from the wheel. The only occasions in which the tire is separated from the wheel are those when the tire needs to be replaced due to lifetime of the tire, or the tire or wheel needs to be replaced due to damages. Therefore, the tire monitoring system that monitors tire information is required to be capable of monitoring constantly without requiring any maintenance for a long period of time or throughout the life time of the tire or wheel. Therefore, a higher capacity is required for the battery for driving the sensing sensor or other circuits.

On the other hand, the tire information transmitter to be provided in the tire cavity region as described above, may be mounted on the assembly of tire and wheel (tire/wheel assembly) and may rotate integrally with the tire/wheel assembly. During the rotation, imbalance may occur which in turn causes vibration. It is necessary for the tire information transmitter to prevent such vibration during the rotation. Accordingly, the mass of the entirety of the tire information transmitter is restricted, and therefore, the mass of the battery to be built in the transmitter is restricted.
There has not been proposed a tire information transmitter that solves the above described practical problems and is excellent in practical use.

The present invention has been made in order to solve the problems described above and an object of the present invention is to provide a tire information transmitter that is excellent in practical use and is capable of constantly transmitting the atmospheric information in the tire cavity region even if attached to the tire/wheel assembly for a long period of time, and to provide a tire information acquiring system and a tire/wheel assembly using the tire information transmitter.

### MEANS TO SOLVE THE PROBLEMS

In order to achieve the above object, the prevent invention provides a tire information transmitter that is mounted in a tire cavity region surrounded by a tire inner circumference surface and a wheel wall surface, and senses atmospheric information in the tire cavity region to wirelessly transmit to outside the tire cavity region, the tire information transmitter including,
a sensor for sensing atmospheric information in the tire cavity region,
a circuit board having a processing circuit for processing a sensed signal from the sensor and having a transmitting circuit for wirelessly transmitting a processed signal, and,
a battery for supplying power for driving the processing circuit and the transmitting circuit, in which the battery is made as an encapsulated body of a thin plate shape, having a thin plate surface, by encapsulating battery components(such as positive electrode, negative electrode, separator) with an insulation film, and the encapsulated body has an area ratio of the thin plate surface to a thickness of the thin plate shape of not less than 200 mm, and a mass of not more than 5 g.

Preferably the area ratio of the thin plate surface to the thickness of the thin plate shape encapsulated body is not less than 400 mm.
It is preferable that the sensor, the circuit board, and the battery are housed in a housing having a curbed mounting surface with a certain curvature corresponding to a curbed wheel circumference rotating surface,
the battery and the circuit board are arranged in the housing in an order of the battery and the circuit board seen from a side of the mounting surface, and
an antenna element for signal transmission of the transmitting circuit, together with the processing circuit and the transmission circuit, is arranged on a side of a substrate surface opposite to the mounting surface as viewed from the circuit board.
It is also preferable that
the circuit board is of a plate shape,
the battery has a thickness of not more than 3 mm, and
the housing has a height, in a vertical direction with respect to the mounting surface of the housing, of not more than one tenth of a curvature radius of the mounting surface.
The battery is, for example, a primary battery made as an encapsulated body by encapsulating a positive electrode, a negative electrode, a separator, and non-aqueous electrolyte with an insulation film.
It is also preferable that the thin plate surface of the battery is an abutting surface for abutting the substrate surface of the circuit board.

It is further preferable that, the abutting surface of the battery is a flat surface of a rectangular shape, and has a thickness in a vertical direction with respect to the abutting surface of not more than one third of any of longitudinal and lateral lengths specifying a size of the abutting surface.
In the above, a positive electrode lead and a negative electrode lead of the battery are extended in parallel from the encapsulated body along the abutting surface, and connected to a circuit on the circuit board.

Further, the atmospheric information includes at least one of inflation pressure or temperature in the tire cavity region.

The present invention also provides a tire information acquiring system including,
the tire information transmitter,
a receiver provided outside the tire cavity region for receiving a signal from the tire information transmitter, in which,
the tire information transmitter continually transmits the atmospheric information in the tire cavity region to the receiver.

The present invention further provides a tire/wheel assembly in which the tire information transmitter is mounted on a wheel circumference rotating surface in the tire cavity region.

Preferably, the tire information transmitter is arranged on a wheel circumference defined by a wheel rotation axis as a center of the circumference, in a position opposite to a position in which the wheel valve is arranged.

The present invention further provides a tire information transmitter that is mounted in a tire cavity region surrounded by a tire inner circumference surface and a wheel wall surface, and senses atmospheric information in the tire cavity region to wirelessly transmit to outside the tire cavity region, the tire information transmitter including,
a sensor for sensing atmospheric information in the tire cavity region,
a circuit board having a processing circuit for processing a sensed signal from the sensor and having a transmitting circuit for transmitting a processed signal, and,
a battery for supplying power for driving the processing circuit and the transmitting circuit, in which the battery has an internal resistance of not more than 5Ω, and a mass energy density of not less than 130mAh/g.

### EFFECTS OF THE INVENTION

A tire information transmitter according to the present invention has a battery for supplying power to various circuits. The battery is made as an encapsulated body of a thin plate shape having a thin plate surface by encapsulating battery components(such as positive electrode, negative electrode, separator) with an insulation film. The encapsulated body has an area ratio of the thin plate surface to a thickness of the thin plate shape of not less than 200 mm, and preferably not less than 400 mm, and a mass of not more than 5g. Therefore, a light weight, low height tire information transmitter can be obtained, which prevents the tire information transmitter from becoming an obstacle when assembling a tire to the wheel, even if it is mounted on a wheel circumference rotating surface having a certain curvature, as well as prevents vibration due to imbalance even if the tire information transmitter rotates together with the tire/wheel assembly, and thus provides a tire information transmitter which is excellent in practical use. In addition, since the battery has an internal resistance of not more than 5 Ω, and a mass energy density of not less than 130 mAh/g, the battery is capable of continually transmitting tire information for a long period of time, for example, approximately 10 years, at maintenance free, even in a tire cavity region, which is a closed space surrounded by the tire and the wheel.

### BRIEF DESCRIPTION OF THE DRAWINGS

[FIG. 1]

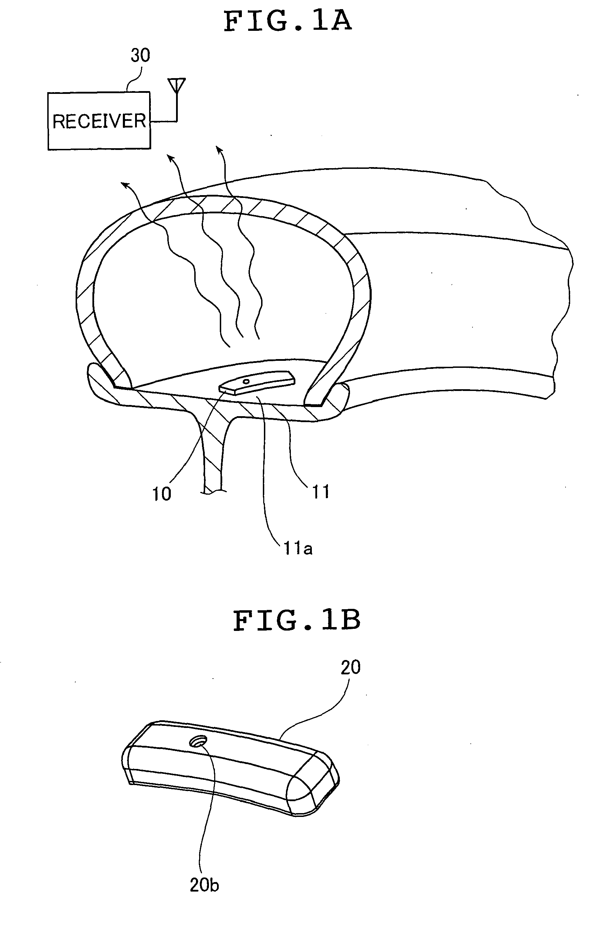

   FIGS. 1A and 1B are external views of a tire inflation pressure/temperature transmitter of an embodiment of the tire information transmitter of the present invention.
[FIG. 2]

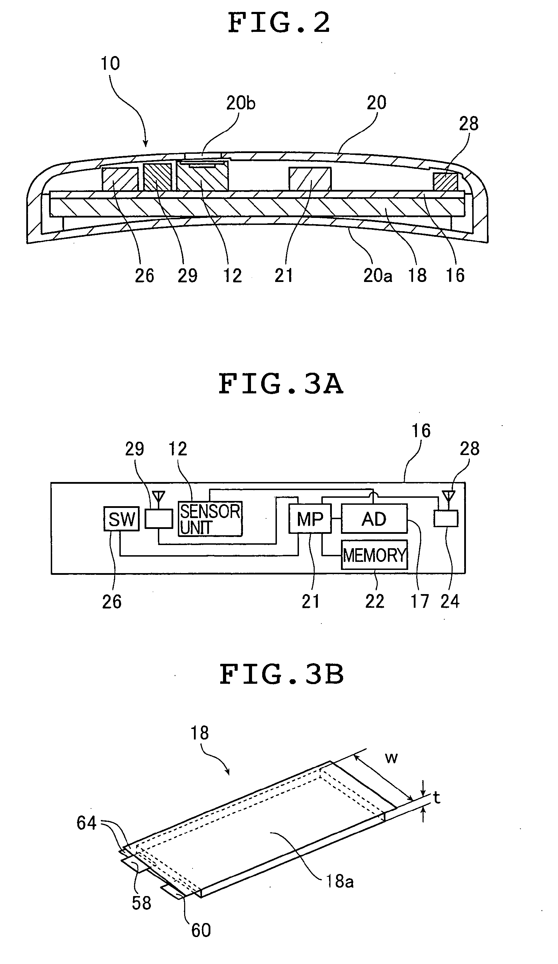

   FIG. 2 is a cross sectional view of the tire inflation pressure/temperature transmitter shown in FIG. 1B.
[FIG. 3]
   FIG. 3A is a block diagram showing a circuit configuration on a circuit board provided in the tire inflation pressure/temperature transmitter shown in FIG. 1B, and FIG. 3B is a schematic perspective view of a primary battery provided in the tire inflation pressure/temperature transmitter shown in FIG. 1B.
[FIG. 4]

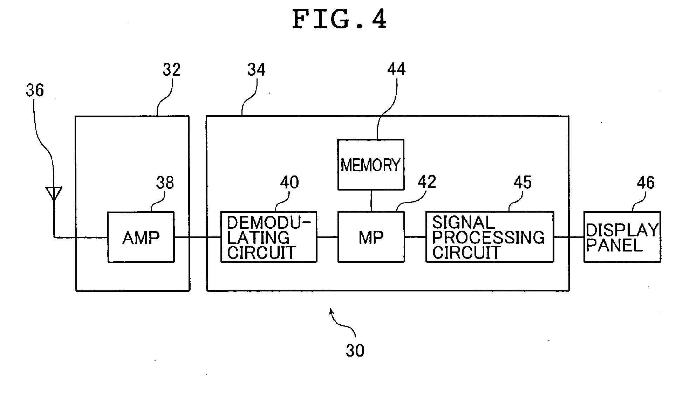

   FIG. 4 is a block diagram showing a configuration of an embodiment of a receiver used in a tire information acquiring system according to the present invention.
[FIG. 5]

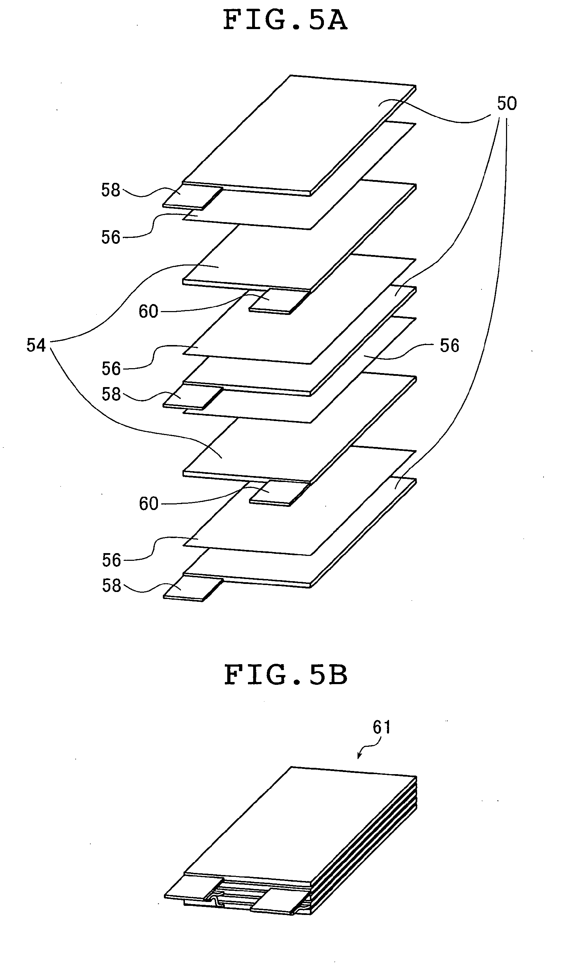

   FIG. 5A is an exploded perspective view of battery components of a battery of the present invention, and FIG. 5B is an external perspective view of the battery components of the battery of the present invention.
[FIG. 6]

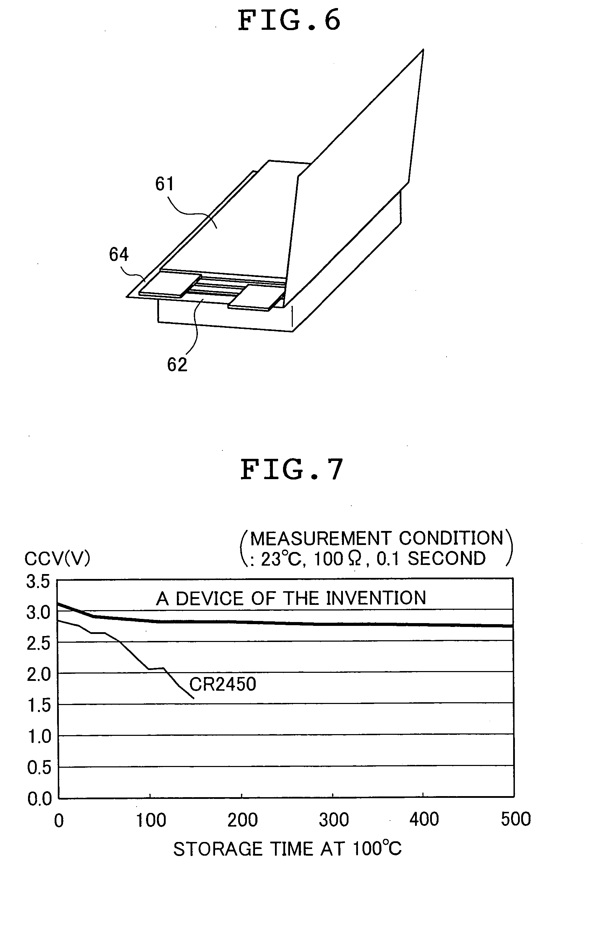

   FIG. 6 is an explanatory chart for explaining assembling of the primary battery shown in FIG. 3B.
[FIG. 7]
   FIG. 7 is a graph showing an example of characteristics of the primary battery shown in FIG. 3B.

### LEGEND

- 10: tire inflation pressure/temperature transmitter
- 11: wheel
- 11a: wheel bottom surface
- 12: sensor unit
- 16: circuit board
- 18: primary battery
- 18a: abutting surface
- 20: housing
- 20a: wheel mounting surface
- 20b: hole
- 21: microprocessor
- 22: memory
- 24: transmitting circuit
- 26: switching device
- 28: antenna element
- 29: communication unit
- 30: receiver
- 32: receiver body unit
- 34: receiver processing unit
- 36: antenna element
- 38: amplifying circuit
- 40: demodulating circuit
- 42: microprocessor
- 44: memory
- 45: signal processing circuit
- 46: display panel
- 50: positive electrode plate
- 52: positive electrode active material layer
- 54: negative electrode plate
- 56: separator
- 58: positive electrode lead
- 60: negative electrode lead
- 62: recess space
- 61: stacked body
- 64: insulation film

### BEST MODE FOR CARRYING OUT THE INVENTION

A tire information transmitter, a tire information acquiring system, and a tire/wheel assembly of the present invention will hereinafter be described in detail on the basis of a preferred embodiment shown in the accompanying drawings.

FIGS. 1A and 1B are external views of a tire inflation pressure/temperature transmitter (hereinafter referred to as the transmitter) 10 of an embodiment of the tire information transmitter of the present invention, which is mounted to a tire/wheel assembly. The transmitter 10 is arranged on a wheel circumference defined by a wheel rotation axis as a center of the circumference, in a position opposite (180 degree) to a position in which the wheel valve is arranged so as to prevent vibration due to imbalance of the wheel.
The transmitter 10 is attached to a curbed wheel bottom surface 11a (circumference rotating surface having a certain curvature) that faces a tire cavity region surrounded by a tire inner circumference surface and a wheel wall surface of a wheel assembly in which a tire is assembled to a wheel 11, to allow the transmitter 10 to be attached along the wheel bottom surface 11a. The transmitter 10 is a device for sensing tire inflation pressure as the atmospheric pressure in the tire cavity region, and tire temperature as the atmospheric temperature to wirelessly transmit to a receiver 30 provided outside the wheel assembly.
The transmitter 10 and the receiver 30 constitute a tire information acquiring system of the present invention.

FIG. 2 is a cross sectional view of the transmitter 10.
The transmitter 10 includes a sensor unit 12 having a pressure sensor and a temperature sensor, a circuit board 16 in a plate shape, a primary battery 18, and a housing 20 for housing the above components in predetermined positions.
As the pressure sensor in the sensor unit 12 which is a sensing sensor for sensing a tire inflation pressure, a known semiconductor pressure sensor, or an electrostatic capacity pressure sensor that senses a gage pressure, differential pressure, or absolute pressure, may be used.
The pressure sensor in the sensor unit 12 is a sensing sensor, and a known solid state type pressure sensor, or a capacitance type pressure sensor which senses gage pressure, differential pressure, or absolute pressure may be used.
The temperature sensor in the sensor unit 12 is a sensing sensor for sensing a temperature in the tire cavity region and a known semiconductor type temperature sensor, or a resistance element type temperature sensor may be used. The sensors are arranged in the vicinity of a hole 20b provided in the housing 20 so that the tire pressure and the tire temperature in the cavity region can be sensed.
The sensors are provided on a circuit board 16. A signal from the sensor is supplied to an AD converting circuit 17 provided on the circuit board 16.

As shown in FIG. 3A, the circuit board 16 includes the AD converting circuit 17, a microprocessor (MP) 21, a memory 22, a transmitting circuit 24, a switching device 26, and an antenna element 28. In FIG. 2, a communication unit 29 which has a receiving antenna element is provided for communicating with external communication devices, and dedicatedly used for setting threshold values used in monitoring tire inflation pressure, and for setting identification information of the transmitter 10.
The circuit board 16 is provided in the housing 20, with a positional relationship in which the circuit board 16 faces a wheel mounting surface 20a formed on a surface of the housing 20 in order for mounting to the wheel bottom surface 11a. The above described circuits and devices are mounted on a substrate surface opposite to the wheel mounting surface 20a formed on the housing 20 for mounting to the wheel bottom surface 11a, as seen from the circuit board 16.

The AD converting circuit 17 is connected to the sensor unit 12 having a pressure sensor and a temperature sensor, and AD-converts the pressure signal outputted from the pressure sensor and the temperature signal outputted from the temperature sensor into a digital signal of, for example, 8 bits.
The MP 21 uses the supplied inflation pressure data and the temperature data which have been AD-converted in the AD converting circuit 18, identification information (ID) with which the transmitter is differentiated from others and a WARD signal retrieved from the memory 22, and detection signal information from the switching device 26 which will be described later, to generate a transmission signal which will be transmitted to the receiver 30. The MP 21 also controls operation of each circuit.

The transmission signal generated in the MP 21 is a signal in which a predetermined format of signal is repeated. The ID signal and the WARD signal can be represented by a specific number of bits of 0 and 1, which are sequentially arranged according to a certain rule. The WARD signal, is a signal, for example, in which a block is formed by arranging 10 bits of 0, and then 10 bits of 1, and such blocks are repeated for three blocks.
The memory 22 can store measured inflation data and temperature data, in addition to storing the ID of the transmitter 10.

The transmitting circuit 24 has a not shown oscillating circuit for generating a carrier wave of, for example, 315 MHz, a not shown modulating unit for modulating the carrier wave corresponding to the transmission signal generated by the MP 21 to generate a high-frequency signal, and a not shown amplifying circuit for amplifying the high frequency signal. The carrier wave may be modulated according to any known mode such as an ASK (Amplitude shift keying) mode, an FSK (Frequency shift keying) mode, a PSK (Phase shift keying) mode, a multi-PSK mode such as QPSK or 8-PSK, or a multi-ASK mode such as 16QAM or 64QAM.

The switching device 26 is a device (sensing sensor) capable of automatically detecting a rotating status or non-rotating status (stop status) of the wheel through in-contact and out-of-contact of a contact point caused by the centrifugal force or vibration generated on the transmitter 10 when the vehicle travels. The detection signal of rotation status generated in the switching device 26 is transmitted to the MP 21. The detection signal is contained in a transmission signal to be transmitted to the receiver 30, and will be used in the receiver 30 for, such as calculating a stop period of the tire in a non-rotation status.
The antenna element 28 is configured for emitting a radio wave of, for example, 315 MHz toward the receiver 30.

The circuits and devices mounted on the circuit board 16 are housed in the housing 20 in predetermined positions. The housing 20 is mounted in such a manner that the wheel mounting surface 20a having a curved surface according to the wheel bottom surface 11a is brought into contact with a curved bottom surface of the wheel 11. The circuit board 16 is housed in the housing 20 in a predetermined position in such a manner that the substrate surface on which the various circuits and antenna element are provided faces toward a side opposite to the wheel mounting surface 20a of the housing 20.

The primary battery 18, as shown in FIG. 3B, is of a thin plate shape (also referred to as a flat shape or a paper shape), and is covered by an insulation film 64 for containing, made of an aluminum foil having both sides coated with a resin. The primary battery 18 has characteristics of an internal resistance of not more than 5 Ω, and a mass energy density of not less than 130 mAh/g, and achieves for example, an internal resistance of not more than 2 Ω and a mass energy density of 168 mAh/g.
The primary battery 18 is of a rectangular shape approximately same as the rectangular shape of the circuit board 16 and is provided on the substrate surface on the side of the wheel mounting surface 20a of the housing 20, as viewed from the circuit board 16, along the substrate surface. In other words, the primary battery 18 has an abutting surface 18a of a flat shape for housing and holding the primary battery 18 in the housing 20 by abutting the substrate surface of the circuit board 16. The primary battery 18 is housed in the housing 20 in such a manner that the abutting surface 18a abuts the substrate surface of the circuit board 16, as shown in FIG. 2.
The primary battery 18 is made an encapsulated body of a rectangular thin plate shape by encapsulating battery components with the insulation film 64, having a thin plate surface such as the abutting surface 18a. The area ratio of the abutting surface 18a (thin plate surface) to the thickness of the thin plate shape of the encapsulated body is not less than 200 mm, and preferably not less than 400 mm, and the mass is not more than 5 g. The thickness in the vertical direction to the abutting surface 18a, that is, the thickness t (refer to FIG. 3B) of the paper shaped battery is not more than one third of any of the lengths in longitudinal and lateral directions that define the size (area) of the paper shape of the abutting surface 18a. A positive electrode lead 58 and a negative electrode lead 60 of the primary battery 18 extend in parallel from one end portion of the battery along the abutting surface 18a to connect to a not shown connecting terminal provided on the circuit board 16.
The primary battery 18 has a rectangular shape as described above and the width of the short side of the rectangular shape may,be changed according to the width of the wheel.

The primary battery 18 has an internal resistance of not more than 5 Ω, and a mass energy density which represents a battery capacity (mAh) per unit mass, of not less than 130mAh/g. The power supplied to the circuit board 16 is mainly used as an energy for continually driving the MP 21 by awaking it from a sleep state, for AD conversion in the AD converting circuit 17, and for wirelessly transmitting the transmission signal in the transmitting circuit 24. The primary battery 18 serves as a power supply for supplying a current for a long period of time continually. For example, when the switching device 26 is ON, the primary battery supplies a current of several tens of mA, for a duration of several m seconds, with a frequency of every several tens of seconds, and at a rated voltage of 3V.

In general, in order to extend the lifetime of a primary battery, the capacity of the battery is increased. However, the larger the battery capacity, the higher the mass of the primary battery. In the practice of the present invention, the primary battery is mounted in a rotatable tire/wheel assembly. Therefore, in order to prevent vibration from being caused by rotation, it is required to minimize the mass of the battery while ensuring a necessary level of battery capacity.
It is also needed to minimize the internal resistance of the battery so that the power is supplied to the circuits efficiently.
The primary battery 18 according to the present invention is provided to satisfy these requirements.
The configuration of the primary battery 18 will be described later.

FIG. 4 is a block diagram showing a schematic configuration of the receiver 30 for receiving a transmission signal of tire inflation pressure and tire temperature transmitted from the transmitter 10.
The receiver 30 includes a receiver body unit 32, and a receiver processing unit 34 connected by wire to the receiver body unit 32.
The receiver body unit 32 includes an antenna element 36 and an amplifying circuit 38. The antenna element 36 is configured to receive a radio wave, for example, of 315MHz transmitted from the transmitter 10. The amplifying circuit 38 is formed of such as a FET (Field-Effect Transistor) and amplifies the received high frequency signal to supply to the receiver processing unit 34.
The receiver body unit 32 is mounted in a tire house in the vicinity of the wheel assembly to which the transmitter 10 is mounted, in a vehicle body side, and the receiver processing unit 34 is mounted, for example, in a CPU in the vehicle body.

The receiver processing unit 34 acquires, in a demodulating circuit 40, inflation pressure data, temperature data, and an ID by demodulating the transmission signal from the high frequency signal and determines in an MP 42 a specific mounting position of a wheel that corresponds to the transmitted tire inflation pressure data and temperature data by using a result of collation of the acquired ID to collation information previously stored in a memory 44. In the MP 42, the tire inflation pressure is monitored as the tire inflation data according to the acquired mounting position information. In a signal processing circuit 45, the tire inflation pressure of the right front wheel, for example, is compared with a predetermined value which has been previously set, so that the tire inflation pressure is judged by being classified into three categories such as "normal", "caution", and "warning". The judgement result is supplied to a display panel 46 connected to the receiver processing unit 34. The display panel 46 displays the tire inflation pressure value on an each wheel mounting position basis. The display panel 46 displays the inflation pressure value and the judged status of the inflation pressure on an instrument panel of the vehicle.

In a tire information acquiring system having the transmitter 10 and the receiver 30, in order to start measurement upon detecting a rotation status by the switching device 26, and to continually acquire tire inflation data and tire temperature data at every several tens of seconds, the transmitter 10 requires a power supply for supplying a current of several tens of mA, for a duration of several m seconds, at a frequency of every tens of seconds. In addition, since the transmitter 10 is mounted in a tier cavity region of a tire/wheel assembly which may not be separated until the lifetime, for example, for approximately 10 years, the primary battery 18 is required to be capable of supplying a power to the circuits on the circuit board for a long period of time without stopping power supply.

FIGS. 5A, 5B, and 6 show a schematic configuration of the primary battery 18.
FIG. 5A is an exploded perspective view showing battery components (positive electrode, negative electrode, separator) of the primary battery 18, and FIG. 5B is an external perspective view of the battery components of the primary battery 18. FIG. 6 is a graph for explaining assembling of the primary battery 18.
The primary battery 18 is a lithium battery of a thin plate shape (paper shape) having a thickness of extremely thin, in which graphite fluoride as the positive electrode active material, lithium as the negative electrode active material, and non-aqueous electrolyte are used. While the primary battery 18 is a non-aqueous electrolyte battery, it may use aqueous solution instead of non-aqueous electrolyte as the electrolyte. Non-aqueous electrolyte may preferably be used.

As shown in FIG. 5A, the battery components include three positive electrode plates 50, two negative electrode plates 54 provided between the positive electrode plates 50, and separators 56 for separating the positive electrode plate 50 and the negative electrode plate 54.

The positive electrode plate 50 is formed of, for example an aluminum foil, and the positive electrode active material layer 52 in which a binder made of graphite fluoride is mixed is adhered to the positive electrode 50.
On the other hand, the negative electrode plate 54 is formed of a lithium foil, and inserted between the positive electrode plates 50 to form a negative electrode. As the separator 56, for example, a microporous film may be used.

As an organic solvent for non-aqueous electrolyte, for example, γ-butyrolactone may be used, and as a solute, lithium fluoroborate is dissolved in the organic solvent at a predetermined mol concentration. Also, as shown in FIG. 5A, a positive electrode lead 58 is projected from one end of each positive electrode plate 50 and a negative electrode lead 60 made of, such as, aluminum is projected from one end of each negative electrode plate 54. A plurality of positive electrode leads 58 are bundled into one to form a positive electrode terminal, and a plurality of negative electrode leads 60 are bundled into one to form a negative electrode terminal, so that these terminals are projected from the primary battery 18.
The mass energy density of graphite fluoride used in the positive electrode active material layer 52 is 860m Ah/g, and the mass energy density of lithium used in the negative electrode plate 54 is 3860 mAh/g. Both of them having a very high mass energy density and a high electromotive voltage of approximately 3 V may suitably be used as a battery material for the primary battery 18 of the transmitter 10 according to the present invention.

A stacked body 61 which is formed by stacking the positive electrode plates 50 and the negative electrode plates 54 with separators 56 held between them as shown in FIG. 5B is housed in a recess space 62 in the insulation film 64 as shown in FIG. 6. In this way, as shown in FIG. 6, the stacked body 61 together with the non-aqueous electrolyte are covered by the insulation film 64 and both edges of the insulation film 64 are heated and bonded to each other, thus forming a battery of a flat shape (paper shape).

The insulation film 64 used in the primary battery 18 of a paper shape may be, for example, a light weight laminate resin film formed of an aluminum foil with the both surfaces laminated with an insulation resin layer.
One surface of the primary battery 18 serves as the abutting surface 18a for abutting the substrate surface of the circuit board 16 in the housing 20. The positive electrode lead 58 and the negative electrode lead 60 are held between the insulation films 64, projected from one end of the insulation films 64, along the abutting surface 18a to connect to a not shown power supply terminal on the circuit board 16.
The thickness t in the vertical direction of the primary battery 18 with respect to the abutting surface 18a is not more than one third of and preferably not more than one fifth of any lengths in longitudinal or lateral directions that define the size of the abutting surface 20a. For example, the thickness, width , and length are 2.0 mm, 15 mm, and 60 mm respectively.

The thickness of the primary battery 18 is not more than 3 mm, and preferably not more than 2.5 mm. The height of the housing 20 in the vertical direction with respect to the wheel mounting surface 20a is preferably not more than one tenth of the curvature radius of the wheel mounting surface 20a. For example, if the curvature radius is 15cm, the height of the housing 20 is preferably not more than 1.5cm.
Since the circuit board 16 to be housed in the housing 20 is of a plate shape, if the circuit board 16 is arranged, in a circumferential direction, along the wheel bottom surface 11a which has a certain curvature in the circumferential direction, the end portions of the circuit board 16 are arranged significantly apart from the wheel bottom surface 11a, which may cause the height of the housing 20 to exceed one tenth of the curvature radius of the mounting surface. In this case, the housing 20 is projected from the wheel bottom surface 11a to become an obstacle in tire assembling in which a tire is assembled to the wheel 11. Also, since nuts or other fixing parts are provided on the wheel bottom surface 11a for fixing a valve through which air is introduced to ensure the tire inflation pressure, it is necessary to limit the height of the housing 20 to a level equal to the projected height of the valve, so as to prevent the housing 20 from becoming an obstacle in tire assembling. In view of the above, the height of the housing 20 is limited, and the thickness of the primary battery 18 is not more than 3 mm, and preferably not more than 2.5 mm. Also, the height of the housing 20 in the vertical direction with respect to the wheel mounting surface 20a is preferably not more than one tenth of the curvature radius of the mounting surface.

Further, reducing the thickness of the primary battery 18 allows the transmitter 10 to perform more efficient wireless transmission, when the housing 20 is mounted on the wheel bottom surface. In other words, since the wheel 11 to which the transmitter 10 is mounted is formed of a conductive material, such as iron and aluminum, the wheel 11 is likely to form a ground conductor which is effective in generating an electric wave. In general, as apparent from the fact that widening the ground conductor allows stabled radiation characteristics, it is possible to enable the wheel 11 to effectively serve as a conductor, if the distance between the circuit board and the wheel 11 which becomes a conductor is reduced.

The width of the primary battery 18 is restricted because the width of the housing 20 is restricted in order to be suitably accommodated in a wheel of a desired size. For example, the width of the primary battery 18 is restricted to 20mm or less.
Moreover, since the wheel 11 to which the transmitter 20 is mounted has a wheel bottom surface 11a which forms a circumference rotating surface with a certain curvature, if the length of the primary battery 18 along the circuit board 16 of a plate shape is increased, the length of the housing 20, as well as the length of the wheel mounting surface 20a of the housing 20 which abuts the wheel bottom surface 11a need to be increased along the shape of the circumference rotating surface of the wheel bottom surface. On the other hand, since the circuit board 16 and the primary battery 18 are of a plate shape, the distance between each end of the housing 20 and the wheel bottom surface is significantly increased corresponding to the curvature of the circumference rotating surface shape, causing the thickness of the housing 20 in this portion to be sharply increased. As a result, the mass and volume of the housing 20 itself are increased. On the other hand, since the transmitter 10 is provided on the rotatable wheel 11, it is not desirable for the tire/wheel assembly if the mass of the housing 20 is increased which in turn increases vibration due to imbalance caused during the rotation of the wheel 11. Considering the above, it is not allowed to increase either of the length of the housing 20 and the length of the primary battery 18.
Accordingly, not only the thickness but also the width and the length of the primary battery 18 are restricted according to characteristics of the transmitter 10, when housed in the housing 20.

On the other hand, the primary battery 18, is required to be capable of continually supplying power to the circuits for a long period of time, for example, for approximately 10 years, which requires to ensure a certain level of battery capacity. However, it is not allowed to increase the battery capacity by simply increasing the battery size, because, as described above, the size, mass, and volume of the primary battery 18 are restricted. The primary battery 18 according to the present invention is a paper shaped battery in which the positive electrode plates and the negative electrode plates are stacked with separators between them, and are encapsulated with an insulation film, as described above. In other words, under the condition in which the size of the primary battery is restricted, the volume of the negative electrode which has a significant influence to the battery capacity is effectively increased, and an opposing area in which the positive electrode and the negative electrode are opposed to each other is effectively increased, thus lowering the internal resistance. In addition, since the primary battery 18 is an encapsulated body encapsulated by an insulation film, the mass is decreased more efficiently compared to a metal housing.
In this way, the battery components (positive electrode, negative electrode, separator) are encapsulated with the insulation film 64 to form an encapsulated body of a thin plate shape having a thin plate surface, thus providing a battery suitable for the transmitter 10 with the area ratio of the abutting surface 18a (thin plate surface) to the thickness of the thin plate shape of the encapsulated body being not less than 200 mm, and the mass being not more than 5 g.
In the present invention, the area ratio of the abutting surface 18a to the thickness of the thin plate shape of the encapsulated body is not less than 200 mm. However, preferably, the area ratio is not less than 400 mm.

The primary battery 18 used in the transmitter 10 according to the present invention has, for example, an internal resistance of not more than 2 Ω, and a mass energy density of 168mAh/g, thus achieving the characteristics of the battery of the present invention in which the internal resistance is not more than 5 Ω, and the mass energy density is not less than 130 mAh/g.
In general, in order to prevent vibration from being caused by imbalance in mass when a tire/wheel assembly rotates, it is desirable that the mass of the transmitter 10 to be mounted to the tire/wheel assembly is small. However, the coin shaped primary battery used in a conventional tire information transmitter has an internal resistance of 6 Ω or more, and a mass energy density of less than 130 mAh/g. Therefore, in order to ensure the battery capacity for the transmitter 10 in which the required battery capacity is fixed, the volume of the primary battery needs to be increased, thereby increasing the mass. As a result, the total mass of the transmitter 10 is accordingly increased, which may easily cause vibration due to imbalance during the rotation of the tire/wheel assembly to which the transmitter 10 is mounted. Therefore, it is desirable for the total mass of the transmitter 10 to be as small as possible. In addition, a valve through which air is introduced into the tire cavity region is provided separately on the wheel 11, which may also cause imbalance of the wheel due to the mass of the valve. In the transmitter 10 according to the present invention, the transmitter 10 is arranged on the wheel circumference defined by the rotation axis of the wheel 11 as the center of the circumference, in a position 180 degree opposite to the position in which the wheel valve is arranged, and the primary battery 18 is light weighed, so that the primary battery 18 is balanced in mass with the valve to prevent imbalance of the wheel 11 efficiently. For this reason, the mass of the primary battery 18 is restricted to a level of the mass of the valve with the upper limit being not more than 5 g.

The primary battery 18 which is in a form of a stacked layer of the positive electrode plate 50 and the negative electrode plate 54, has an internal resistance of not more than 5 Ω. The reason why the internal resistance is not more than 5 Ω is because if the internal resistance exceeds 5 Ω, the current for driving the circuits is decreased to a level lower than a predetermined level, with which the circuits may not be driven. The internal resistance of the primary battery 18 is preferably not more than 3 Ω.

The above described configuration of the primary battery 18, even if the transmitter 10 is mounted to the tire/wheel assembly, suppresses vibration due to rotation and makes the transmitter 10 capable of continually transmitting tire air pressure and tire temperature in the tire cavity region as the atmospheric information for a long period of time.
It should be noted that while the primary battery 18 is arranged along the substrate surface of the circuit board 16, since the primary battery 18 is in a form of an encapsulated body encapsulated by the insulation film 64, as described, the shape of the encapsulated body can be modified with a certain flexibility. For example, the primary battery 18 can be housed in the housing 20 by being bent to be suited to the curvature of the wheel bottom surface 11a. In this case, the circuit board 16 may also be configured to be suited to the curvature of the wheel bottom surface 11a, for example, by connecting a plurality of short length, plate shaped substrates. As the substrate of the circuit board 16, a flexible substrate capable of bending to be suited to the curvature of the wheel bottom surface 16a may be used.

FIG. 7 is a graph showing changes with time in CCV (Closed Circuit Voltage) when held at 100 °C, as an example of characteristics of the primary battery 18, the changes obtained by supplying a current with 100 Ω for a duration of 0.1 seconds under a measurement condition of 23 °C.
TABLE 1 below shows comparison between the primary battery 18 as a device of the present invention shown in FIG. 7 and the CR2450 commercially available, in terms of specifications. The primary battery 18 has a battery configuration shown in FIGS. 5A, 5B, and 6, in which an aluminum foil is used for the positive electrode plate 50, graphite fluoride is used for the positive electrode active material layer 52, and a lithium foil is used for the negative electrode plate 54, a solution in which lithium fluoroborate is dissolved in γ-butyrolactone at a predetermined mol concentration is used as non-aqueous electrolyte. The battery capacity in TABLE 1 is measured with a continuous discharge at a constant-resistance of 2.7 kΩ, and the internal resistance is measured by using a 1 kHz AC impedance method.

[TABLE 1]

**TABLE 1**

| | **A Device of the Invention** | **CR2450** |
|---|---|---|
| **Nominal Voltage(V)** | **3** | **3** |
| **Battery Capacity (mAh)** | **400** | **600** |
| **Battery Size (mm)** | **W×L×T 15 × 60 × 2.2** | **Diameter×T Φ24 × 5.0** |
| **Mass (g)** | **2.6** | **6.6** |
| **Mass Energy Density (mAh/g)** | **154** | **91** |
| **Internal Resistance (Ω)** | **2.0** | **5.8** |

As shown in FIG. 7, the primary battery 18 as a device of the invention which has a mass energy density of 154 mAh/g, an internal resistance of 2.0 Ω, an area ratio of the thin plate surface to the thickness of the thin plate shape of 409 mm (= 15 × 60 / 2.2), and a mass of 2.6 g has a superior CCV characteristic to the CR2450.

The tire information transmitter, tire information acquiring system, and tire/wheel assembly of the present invention have been described in detail heretofore. However, it should be understood that the present invention is not limited to the embodiments described above, and any improvements and modifications may be incorporated unless otherwise such modification and improvements depart from the scope of the invention.

### INDUSTRIAL APPLICABILITY

The tire information transmitter according to the present invention has a battery for supplying power to various circuits. The battery is of an encapsulated body of a thin plate shape having a thin plate surface, formed by encapsulating battery components such as a positive electrode, a negative electrode and a separator, with an insulation film, and has an area ratio of the thin plate surface to the thickness of the thin plate shape of the encapsulated body of not less than 200 mm, and preferably not less than 400 mm, and a mass of not more than 5 g. Therefore, it is possible to reduce the weight and suppress the height of the tire information transmitter, so that the tire transmitter is prevented from becoming an obstacle in tire assembling in which a tire is assembled to the wheel, even if mounted to a circumference rotating surface of a wheel having a certain curvature, and vibration due to imbalance is suppressed, even when rotated in accordance with the rotation of the tire/wheel assembly, allowing a tire information transmitter superior in practical use. In addition, the battery has an internal resistance of not more than 5 Ω, and a mass energy density of not less than 130 mAh/g, allowing the battery to be capable of continually transmitting tire information from inside the tire cavity region, which is a closed space surrounded by the tire and the wheel, for a long period of time, for example, for approximately 10 years without requiring maintenance.

## Claims

1. A tire information transmitter which is mounted in a tire cavity region surrounded by a tire inner circumference surface and a wheel wall surface, and senses atmospheric information in the tire cavity region to wirelessly transmit to outside the tire cavity region, the tire information transmitter including,
a sensor for sensing atmospheric information in the tire cavity region,
a circuit board having a processing circuit for processing a sensed signal from the sensor and having a transmitting circuit for wirelessly transmitting a processed signal, and,
a battery for supplying power for driving the processing circuit and the transmitting circuit,
wherein the battery is made as an encapsulated body of a thin plate shape, having a thin plate surface, by encapsulating battery components with an insulation film, and the encapsulated body has an area ratio of the thin plate surface to a thickness of the thin plate shape of not less than 200 mm, and a mass of not more than 5 g.

2. The tire information transmitter according to claim 1,
wherein the sensor, the circuit board, and the battery are housed in a housing having a curbed mounting surface with a certain curvature corresponding to a curbed wheel circumference rotating surface,
the battery and the circuit board are arranged in the housing in an order of the battery and the circuit board seen from a side of the mounting surface, and
an antenna element for signal transmission of the transmitting circuit, together with the processing circuit and the transmission circuit, is arranged on a side of a substrate surface opposite to the mounting surface as viewed from the circuit board.

3. The tire information transmitter according to claim 2, wherein the circuit board is of a plate shape,
the battery has a thickness of not more than 3 mm, and
the housing has a height, in a vertical direction with respect to the mounting surface of the housing, of not more than one tenth of a curvature radius of the mounting surface.

4. The tire information transmitter according to any one of claims 1 to 3, wherein the battery is a primary battery made as an encapsulated body by encapsulating a positive electrode, a negative electrode, a separator, and non-aqueous electrolyte with an insulation film.

5. The tire information transmitter according to any one of claims 1 to 4, wherein the thin plate surface of the battery is an abutting surface for abutting the substrate surface of the circuit board.

6. The tire information transmitter according to claim 5, wherein the abutting surface of the battery is a flat surface of a rectangular shape, and has a thickness of the battery in a vertical direction with respect to the abutting surface of not more than one third of any of longitudinal and lateral lengths specifying a size of the abutting surface.

7. The tire information transmitter according to claim 6,
wherein a positive electrode lead and a negative electrode lead of the battery are extended in parallel from the encapsulated body along the abutting surface, and connected to a circuit on the circuit board.

8. The tire information transmitter according to any one of claims 1 to 7, wherein the atmospheric information includes at least one of inflation pressure or temperature in the tire cavity region.

9. A tire information acquiring system which includes,
a tire information transmitter according to any one of claims 1 to 8,
a receiver provided outside the tire cavity region for receiving a signal from the tire information transmitter, in which,
the tire information transmitter continually transmits the atmospheric information in the tire cavity region to the receiver.

10. A tire/wheel assembly in which a tire information transmitter according to any one of claims 1 to 9 is mounted on a wheel circumference rotating surface in the tire cavity region.

11. The tire/wheel assembly according to claim 10, wherein the tire information transmitter is arranged on a wheel circumference defined by a wheel rotation axis as a center of the circumference, in a position opposite to a position in which a wheel valve is arranged.

12. A tire information transmitter which is mounted in a tire cavity region surrounded by a tire inner circumference surface and a wheel wall surface, and senses atmospheric information in the tire cavity region to wirelessly transmit to outside the tire cavity region, the tire information transmitter including,
a sensor for sensing atmospheric information in the tire cavity region,
a circuit board having a processing circuit for processing a sensed signal from the sensor and having a transmitting circuit for transmitting a processed signal, and,
a battery for supplying power for driving the processing circuit and the transmitting circuit, in which the battery has an internal resistance of not more than 5Ω, and a mass energy density of not less than 130mAh/g.
